# EUROPEAN PATENT APPLICATION

(11) **EP 2 071 941 A2**
(43) Date of publication of application: **24.06.2009**
(21) Application number: 08396018.7
(22) Date of filing: 19.12.2008
(51) Int. Cl.: A01K 1/01

(54) **Product for WC seat**

(30) Priority: 21.12.2007 FI 20071010
(71) Applicant: T:mi Centorp, 74700 Kiuruvesi (FI)
(72) Inventor: Pääkkö, Reino, 74700 Kiuruvesi (FI)
(74) Representative: Pitkänen, Hannu Alpo Antero

(57) **Abstract**

The invention relates to a product for a WC seat and particularly a product for animals to urinate and defecate on a WC seat, which product includes an edge part (1) settable on top of the edges of the WC seat, a wall part (2) extending downwards from the edge part and a bottom part (3) in which one or more holes (4) have been formed. In the product according to the invention, its bottom part includes a bottom door (5) which is pivotedly fastened in the wall part, and the product includes a carrier means (6) joined in the edge part and a conveying means located between the carrier means and the bottom door for opening and closing the bottom door.

## Description

The invention relates to a product for a WC seat and particularly a product for animals to urinate and defecate on a WC seat, which product includes an edge part settable on top of the edges of the WC seat, a wall part extending downwards from the edge part and a bottom part in which one or more holes have been formed.

These days, people keep numerous pets, such as cats, dogs and other animals, in densely populated areas in blocks of flats and other dwellings. In most cases, pets are not allowed to wander freely in and out of the dwelling. Many people work during the day, whereby their pets are not allowed either for this reason to go out and urinate and defecate freely. Usually, such pets are taken for a walk and to exonerate nature in the mornings before going to work and in the afternoon straight after having returned from work.

There exist boxes or equivalents locatable inside dwellings which boxes are filled with absorbent material and which pets can use for urinating and defecating. Cleaning and attending to these boxes require a lot of time.

Some pets learn to use the WC seat of the dwelling for urinating and defecating. Then, a support or equivalent product is set on top of the opened WC seat on which the pet stays in place and after having been accustomed to which it can use the WC seat to urinate and defecate. Particularly cats will learn to relieve themselves in this way when trained. It takes some time for training before cats are accustomed to urinating and defecating in the product or on top of it.

A problem related to recent products is that animal urine and faeces stick at the bottom of the product and/or on its edges, and all stains are not always noticed or cleansed. When the product is lifted from top of the WC seat e.g. when the resident comes home and dirt is not noticed or removed, this dirt can foul the place in which the product is stored between uses. Furthermore, the product has to be lifted and carried by taking hold of its edge parts, which is sometimes awkward.

The appearance and structure of such products settable on top of WC seats vary. Usually, they have an edge part which can be set between the edge of the WC seat and the edges of the lower part of the pan lid or it can be placed on top of the edges of the lower part of the pan lid. The product often consists of a wall part extending downwards from the edge part and a bottom part which has one or more holes. The size of these holes varies in different embodiments. However, it has been discovered that a pet and particularly a cat will not urinate and defecate in an open WC pan and on such support which has no bottom in sight.

The object of the invention is to introduce a product for a WC seat by means of which disadvantages related to prior-art products are eliminated. Particularly, an object of the invention is to introduce a product the use of which is clean and the training of a pet to use which is easier than earlier.

The object of the invention is achieved with a product for a WC seat which is characterised by what is presented in the claims.

The bottom part of the product according to the invention includes a bottom door which is pivotedly fastened to the wall part, and the product includes a carrier means joined in the edge part and a conveying means located between the carrier means and the bottom door for opening and closing the bottom door. By means of the bottom door, the bottom of the product is brought in a closed position when lifting, conveying and carrying the product into position and it also protects the base during storage and no dirtying secretions are able to fall from the bottom of the product. By means of the carrier means, the product can be lifted, conveyed and carried easily and simply.

In an advantageous embodiment of the invention, the carrier means is a grip or a handle pivotedly located in the edge part. Such a carrier means is a simple but practical arrangement.

In an advantageous additional embodiment of the invention, the conveying means is a line-like element fastened from its one end to the carrier means and from its other end to the bottom door. Such a structure is simple and applicable for the use.

A further advantageous additional embodiment of the invention includes separate bottom parts which have holes of different sizes. These bottom parts are used when training the pet, e.g. a cat, to use the product. First, the bottom door can be closed. In the next stage, the bottom door is opened and such a bottom part which includes small holes is set on the bottom. As training continues, this bottom part is removed and replaced by a next bottom part which has slightly larger holes. Last, the final bottom part which has relatively large holes is set. It is also possible that the standard bottom of the product is this final bottom part and on top of it are set bottom parts provided with smaller holes in the training stage. Naturally, the holes in the bottom parts are aligned, though in the bottom parts of the training stage these holes are smaller than in the final bottom.

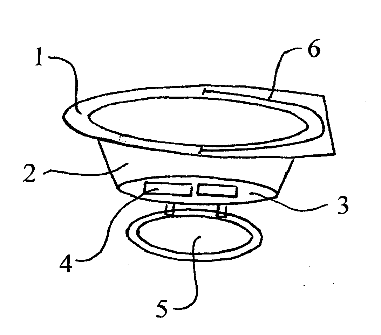

Next, the invention will be described in more detail with reference to the enclosed drawing which presents an oblique side view of a product according to the invention.

The figure shows a product for animals to urinate and defecate on a WC seat. The appearance of the product reminds mostly a basin. It consists of an edge part 1 settable on top of the edges of the WC seat which part is shaped to correspond the outer edges of the walls of the opening of the WC seat. Obliquely downwards from the edge part extends a wall part 2 which comes inside the WC seat when the product is set in place. In the lower part of the wall part is fastened a bottom part 3 in which have been formed two holes 4 in this embodiment. Furthermore, to the bottom part is pivotedly fastened by means of hinges a bottom door 5.

On top of the edge part is located a carrier means which is a grip or a handle 6 pivotedly fastened to the edge part. Between the handle and the bottom door is located a line, cord or equivalent means (not shown in the figure) which is fastened from its one end to the carrier means and from its other end to the bottom door on the opposite side of the hinges. When the handle is lifted, the line tightens and lifts the bottom door, whereby the bottom door closes i.e. turns against the bottom part. Equivalently, when the handle is released and it presses against the edge part, the line is freed and the bottom door opens.

When using the product, it is possible to put a thin layer of sawdust or other drying material on the edges of the bottom part. Then, the cat or some other pet can spread the material after doing its business as it is accustomed to. This drying material can be dropped in the water space of the WC seat when the product is removed. When a relatively little amount of drying material is used, it will not block pipings.

The product according to the invention is advantageously manufactured mainly of plastic material, but also other materials can be used.

The invention is not limited to the described advantageous embodiment, but it can vary within the scope of the inventive idea presented in the claims.

## Claims

1. A product for a WC seat and particularly a product for animals to urinate and defecate on a WC seat, which product includes an edge part (1) settable on top of the edges of the WC seat, a wall part (2) extending downwards from the edge part and a bottom part (3) in which one or more holes (4) have been formed, ***characterised* in that** the bottom part includes a bottom door (5) which is pivotedly fastened in the wall part, and that the product includes a carrier means (6) joined in the edge part and a conveying means located between the carrier means and the bottom door for opening and closing the bottom door.

2. A product according to claim 1, ***characterised* in that** the carrier means (6) is a grip or a handle pivotedly located in the edge part.

3. A product according to claim 1 or 2, ***characterised* in that** the conveying means is a line-like element fastened from its one end to the carrier means and from its other end to the bottom door.

4. A product according to any one of claims 1-3, ***characterised* in that** it includes separate bottom parts in which there are holes of different sizes.
